# EUROPEAN PATENT APPLICATION

(11) **EP 2 749 748 A1**
(43) Date of publication of application: **02.07.2014**
(21) Application number: 11871105.0
(22) Date of filing: 25.08.2011
(51) Int. Cl.: F01N 3/36, F01N 3/08, F01N 3/24

(54) **EXHAUST GAS PURIFICATION DEVICE FOR INTERNAL COMBUSTION ENGINE**

(71) Applicant: Toyota Jidosha Kabushiki Kaisha, Toyota-shi, Aichi 471-8571 (JP)
(72) Inventor: ITOH, Kazuhiro, Toyota-shi Aichi 471-8571 (JP); HIROTA, Shinya, Toyota-shi Aichi 471-8571 (JP)
(74) Representative: Albutt, Anthony John
(86) International application number: PCT/JP2011/069189
(87) International publication number: WO 2013/027295

(57) **Abstract**

The present invention resides in an exhaust gas purification apparatus for an internal combustion engine, comprising an exhaust gas purification catalyst which is arranged in an exhaust gas passage of the internal combustion engine for a reducing agent added from a reducing agent addition valve, the reducing agent addition valve which adds the reducing agent to an exhaust gas allowed to flow upstream from the exhaust gas purification catalyst, and a dispersion member which disperses the reducing agent added from the reducing agent addition valve, wherein a task or object thereof is to form fine particles of the reducing agent and improve the dispersibility while suppressing the increase in the exhaust resistance caused by the dispersion member to be small. In order to solve the task or achieve the object, in the present invention, the dispersion member is arranged only on a flight route of a coarse reducing agent which is included in the reducing agent added from the reducing agent addition valve and which has relatively large particle diameters.

## Description

### TECHNICAL FIELD

The present invention relates to a technique for performing purification of an exhaust gas by supplying a reducing agent to an exhaust gas purification catalyst provided in an exhaust gas passage of an internal combustion engine.

### BACKGROUND ART

An exhaust gas purification apparatus for an internal combustion engine is known, which is provided with an exhaust gas purification catalyst arranged in an exhaust gas passage of an internal combustion engine, a reducing agent injection valve arranged in the exhaust gas passage upstream from the exhaust gas purification catalyst, and a collision diffusion member arranged in the exhaust gas passage downstream from the reducing agent injection valve and upstream from the exhaust gas purification catalyst (see, for example, Patent Document 1).

### PRIOR ART DOCUMENTS

### Patent Documents

Patent Document 1: Japanese Patent Application Laid-Open No. 2009-41370A.

### DISCLOSURE OF THE INVENTION

### Problem To Be Solved By The Invention

When the reducing agent, which is injected from the reducing agent injection valve, collides with the collision diffusion member, then the reducing agent is dispersed in the exhaust gas passage, and the reducing agent is easily mixed with the exhaust gas uniformly or homogeneously. However, the exhaust resistance (exhaust back pressure) is increased by the collision diffusion member. Therefore, a possibility also arises such that the increase in the back pressure may be caused and/or the decrease in the engine output may be caused, for example, during the high load operation of the internal combustion engine.

The present invention has been made taking the foregoing actual circumstances into consideration, an object of which is to enable the fine particle formation and the improvement in the dispersibility of a reducing agent while suppressing the increase in the exhaust resistance to be small, in an exhaust gas purification apparatus for an internal combustion engine comprising an exhaust gas purification catalyst which is arranged in an exhaust gas passage of the internal combustion engine, a reducing agent addition valve which adds the reducing agent into an exhaust gas allowed to flow through the upstream of the exhaust gas purification catalyst, and a dispersion member which is provided to disperse, in the exhaust gas passage, the reducing agent added from the reducing agent addition valve.

### Means For Solving The Problem

In the present invention, in order to achieve the object described above, an exhaust gas purification apparatus for an internal combustion engine is provided with an exhaust gas purification catalyst which is arranged in an exhaust gas passage of the internal combustion engine, for a reducing agent added from a reducing agent addition valve, the reducing agent addition valve which adds the reducing agent to an exhaust gas allowed to flow through the upstream of the exhaust gas purification catalyst, and a dispersion member which disperses the reducing agent added from the reducing agent addition valve, wherein the dispersion member is arranged only on a flight route of a coarse reducing agent which is included in the reducing agent added from the reducing agent addition valve and which has relatively large particle diameters.

In particular, an exhaust gas purification apparatus for an internal combustion engine according to the present invention comprises:
an exhaust gas purification catalyst which is arranged in an exhaust gas passage of the internal combustion engine;
a reducing agent addition valve which adds a reducing agent to an exhaust gas allowed to flow upstream from the exhaust gas purification catalyst; and
a dispersion member which is a member for allowing the reducing agent added from the reducing agent addition valve to collide therewith and which is arranged on a flight route of a coarse reducing agent, the coarse reducing agent being included in the reducing agent added from the reducing agent addition valve and the coarse reducing agent being the reducing agent having relatively large particle diameters.

According to the construction as described above, only the coarse reducing agent, which is included in the reducing agent added from the reducing agent addition valve, collides with the dispersion member. When the coarse reducing agent collides with the dispersion member, then the coarse reducing agent is formed or converted into fine particles thereby, and the coarse reducing agent is dispersed in the exhaust gas. As a result, the uniform or homogeneous mixing is facilitated between the coarse reducing agent and the exhaust gas.

On the other hand, the reducing agent (hereinafter referred to as "fine particle reducing agent"), which is included in the reducing agent added from the reducing agent addition valve and which has particle diameters smaller than those of the coarse reducing agent, does not collides with the dispersion member. However, the fine particle reducing agent has the small particle diameters and the small weight. Therefore, even when the fine particle reducing agent does not collide with the dispersion member, the fine particle reducing agent is mixed with the exhaust gas uniformly or homogeneously.

Therefore, according to the dispersion member of the present invention, substantially all of the reducing agent added from the reducing agent addition valve is mixed with the exhaust gas uniformly. Further, the size of the dispersion member of the present invention is smaller than the size to be provided when substantially the whole quantity of the reducing agent added from the reducing agent addition valve is allowed to collide with the dispersion member. As a result, the increase in the exhaust resistance resulting from the dispersion member can be suppressed to be small.

Therefore, according to the exhaust gas purification apparatus for the internal combustion engine of the present invention, it is possible to effect the fine particle formation of the reducing agent and the improvement in the dispersibility while the increase in the exhaust resistance resulting from the dispersion member is suppressed to the minimum. As a result, it is possible to effect the uniform or homogeneous mixing between the reducing agent and the exhaust gas while suppressing the increase in the back pressure and the decrease in the engine output to be small.

The "coarse reducing agent" referred to herein expresses, for example, the reducing agent having a size capable of possessing the inertial force for slipping through (passing through) the exhaust gas purification catalyst, the reducing agent having a size (weight or mass) capable of penetrating through the exhaust gas without being mixed with the exhaust gas uniformly, or the reducing agent having a size incapable of being vaporized until arrival at the exhaust gas purification catalyst from the reducing agent addition valve. When a reducing agent originating from ammonia (for example, aqueous solution of urea, ammonium carbamate or the like) is used as the reducing agent, it is also allowable that the reducing agent having a size not hydrolyzed in the exhaust gas is defined as the coarse reducing agent. It is assumed that the flight route of the coarse reducing agent as described above is previously determined experimentally.

In the present invention, when the reducing agent addition valve is an injection valve having a cone-shaped (full cone-shaped) spray pattern, the coarse reducing agent tends to gather at the circumferential edge portion of the spray. Therefore, the dispersion member may be arranged so that the dispersion member interferes with the circumferential edge portion of the spray, and the dispersion member does not interfere with the central portion of the spray. In other words, the dispersion member may be arranged on a route along which the circumferential edge portion of the cone-shaped spray flies.

In this arrangement, the dispersion member may be a member having a protruding portion which is formed on one end surface of a cylindrical member and which extends outwardly in a radial direction or inwardly in the radial direction. In this arrangement, the fine particle reducing agent, which gathers at the central portion of the cone-shaped spray, flows to the downstream through the inside of the cylindrical member, and the coarse reducing agent, which gathers at the circumferential edge portion of the cone-shaped spray, collides with the protruding portion so that the coarse reducing agent is formed or converted into fine particles. Further, the flow of the exhaust gas is disturbed by causing the collision of the exhaust gas with the protruding portion or by making a detour to avoid the protruding portion. Therefore, the mixing is facilitated between the exhaust gas and the reducing agent converted into the fine particles.

In another viewpoint, a plate member, which is formed to have an annular form, can be also used as the dispersion member. In this arrangement, the fine particle reducing agent, which gathers at the central portion of the cone-shaped spray, passes through the inner side of the annular plate member, and the coarse reducing agent, which gathers at the circumferential edge portion of the cone-shaped spray, collides with the plate member so that the coarse reducing agent is converted into fine particles. Further, the flow of the exhaust gas is disturbed by causing the collision of the exhaust gas with the plate member or by making a detour to avoid the plate member. Therefore, the mixing is facilitated between the exhaust gas and the reducing agent converted into the fine particles.

When the annular plate member is used as the dispersion member, protrusions and recesses may be provided on a surface of the plate member (surface opposed to the flow of the exhaust gas and the reducing agent). In this arrangement, the diffusion of the coarse reducing agent allowed to collide with the surface of the plate member is facilitated, and the vaporization (evaporation) of the coarse reducing agent adhered to the surface of the plate member is facilitated.

When the annular plate member is used as the dispersion member, a plurality of through-holes, which penetrate through the plate member, may be provided for the plate member. In this arrangement, it is desirable that the diameter of the through-hole is smaller than the diameter of the coarse reducing agent. According to the plate member constructed as described above, the exhaust gas and the reducing agent converted into fine particles by the collision with the plate member can be allowed to pass through the through-holes. As a result, the exhaust resistance, which is caused by or results from the dispersion member, can be further decreased.

When a multi-hole type injection valve, in which a plurality of injection holes are arranged in an annular form, is used as the reducing agent addition valve, the dispersion member may be constructed by arranging a plurality of plate members in an annular form. According to the construction as described above, the increase in the exhaust resistance, which results from the dispersion member, can be suppressed to be smaller. Further, the respective plate members may be arranged perpendicularly with respect to the traveling direction of the spray, or the respective plate members may be arranged obliquely with respect to the traveling direction of the spray.

The dispersion member according to the present invention may be provided at a plurality of positions on the flight route of the coarse reducing agent. In this arrangement, the coarse reducing agent easily collides with at least one of the plurality of dispersion members. Therefore, the coarse reducing agent is formed or converted into fine particles more reliably. Further, when the coarse reducing agent collides with the plurality of dispersion members, the coarse reducing agent can be formed or converted into smaller fine particle reducing agent.

### Effects Of The Invention

According to the present invention, it is possible to enable the fine particle formation and the improvement in the dispersibility of the reducing agent while suppressing the increase in the exhaust resistance to be small, in the exhaust gas purification apparatus for the internal combustion engine, comprising the exhaust gas purification catalyst which is arranged in the exhaust gas passage of the internal combustion engine, the reducing agent addition valve which adds the reducing agent into the exhaust gas allowed to flow through the upstream from the exhaust gas purification catalyst, and the dispersion member which disperses, in the exhaust gas passage, the reducing agent added from the reducing agent addition valve.

### Brief Description Of The Drawings

Fig. 1 shows a schematic construction of an exhaust system of an internal combustion engine to which the present invention is applied.
Fig. 2 shows a spray shape of the reducing agent injected from a reducing agent addition valve.
Fig. 3 shows a construction of a dispersion member in a first embodiment.
Fig. 4 shows relative positions of the reducing agent injected from the reducing agent addition valve and the dispersion member.
Fig. 5 shows a modified embodiment of the dispersion member in the first embodiment.
Fig. 6 shows a modified embodiment of the dispersion member in the first embodiment.
Fig. 7 shows a modified embodiment of the dispersion member in the first embodiment.
Fig. 8 shows a modified embodiment of the dispersion member in the first embodiment.
Fig. 9 shows a modified embodiment of the dispersion member in the first embodiment.
Fig. 10 shows a spray shape of the reducing agent injected from a multi-hole type reducing agent addition valve.
Fig. 11 shows a construction of a dispersion member adapted to the multi-hole type reducing agent addition valve.
Fig. 12 shows a spray shape of the reducing agent injected from a slit type reducing agent addition valve.
Fig. 13 shows a construction of a dispersion member adapted to the slit type reducing agent addition valve.
Fig. 14 shows another exemplary arrangement of a reducing agent addition valve and a dispersion member in the first embodiment.
Fig. 15 shows still another exemplary arrangement of a reducing agent addition valve and a dispersion member in the first embodiment.
Fig. 16 shows a construction of a dispersion member in a second embodiment.
Fig. 17 shows a modified embodiment of the dispersion member in the second embodiment.
Fig. 18 shows another exemplary arrangement of a reducing agent addition valve and a dispersion member in the second embodiment.
Fig. 19 shows a plan view illustrating a construction of the dispersion member shown in Fig. 18.
Fig. 20 shows a modified embodiment of the dispersion member shown in Fig. 18.
Fig. 21 shows a plan view illustrating a construction of a dispersion member provided when the reducing agent addition valve shown in Fig. 18 is a slit type reducing agent addition valve.

### The Best Mode For Carrying Out The Invention

A specified embodiment of the present invention will be explained below on the basis of the drawings. For example, the dimension, the material, the shape, and the relative arrangement of constitutive parts or components described in the embodiment of the present invention are not intended to limit the technical scope of the invention only thereto, unless otherwise noted.

### (First Embodiment)

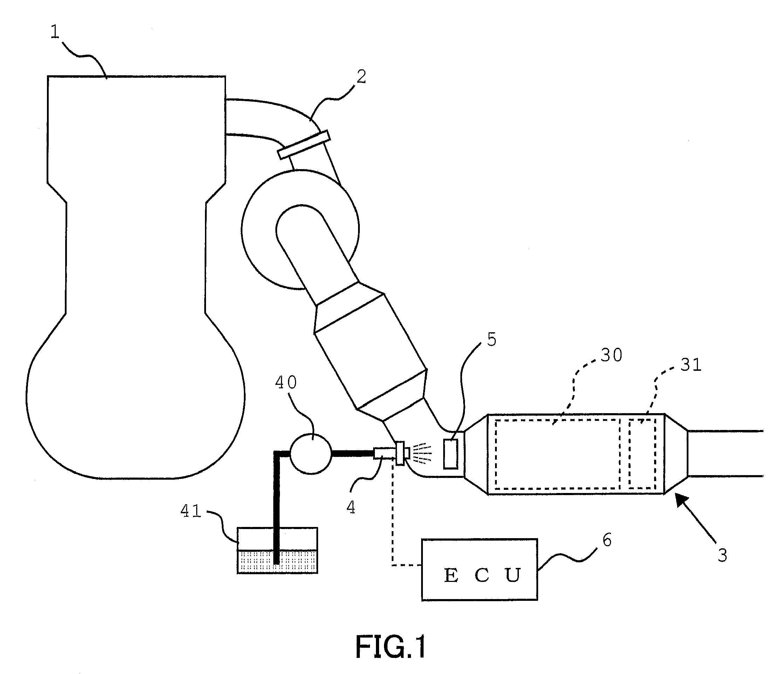

At first, a first embodiment of the present invention will be explained on the basis of Figs. 1 to 15. Fig. 1 shows a schematic construction of an exhaust system of an internal combustion engine to which the present invention is applied.

The internal combustion engine 1 shown in Fig. 1 is a compression ignition type internal combustion engine (diesel engine) which uses light oil as fuel. An exhaust gas passage 2 is connected to the internal combustion engine 1. A catalyst casing 3, which accommodates a selective reduction catalyst 30, is arranged at an intermediate position of the exhaust gas passage 2.

A reducing agent addition valve 4 is attached to the exhaust gas passage 2 upstream from the catalyst casing 3. In the example shown in Fig. 1, the reducing agent addition valve 4 is attached to the exhaust gas passage 2 so that the axial direction of the reducing agent addition valve 4 is parallel to the axial direction of the catalyst casing 3 (selective reduction catalyst 30). In other words, the reducing agent addition valve 4 is arranged so that the axial direction of the reducing agent addition valve 4 is parallel to the flow direction of the exhaust gas allowed to flow into the selective reduction catalyst 30.

The reducing agent addition valve 4 is communicated with a reducing agent tank 41 via a pump 40. A reducing agent originating from ammonia is stored in the reducing agent tank 41. The pump 40 pumps up the reducing agent from the reducing agent tank 41, and the pump 40 discharges the pumped up reducing agent to the reducing agent addition valve 4. The reducing agent addition valve 4 injects the reducing agent discharged from the pump 40 into the exhaust gas passage 2. The opening/closing operation of the reducing agent addition valve 4 is electrically controlled by an electronically controlled unit (ECU) 6.

In this case, an aqueous solution of urea, ammonium carbamate or the like can be used as the reducing agent originating from ammonia. In this embodiment, the aqueous solution of urea is used as the reducing agent originating from ammonia. When the aqueous solution of urea is used as the reducing agent, a part of ammonia (NH₃), which is produced by the hydrolysis of the aqueous solution of urea, sometimes passes through (slips through) the selective reduction catalyst. Therefore, the catalyst casing 3 may accommodate an ammonia oxidation catalyst 31 downstream from the selective reduction catalyst 30. When the ammonia oxidation catalyst 31 is arranged downstream from the selective reduction catalyst 30, ammonia (NH₃), which passes through (slips through) the selective reduction catalyst 30, is oxidized by the ammonia oxidation catalyst 31. As a result, it is possible to avoid such a situation that ammonia (NH₃) is discharged to the atmospheric air.

A dispersion member 5 is arranged in the exhaust gas passage 2 positioned between the reducing agent addition valve 4 and the catalyst casing 3. The dispersion member 5 is the member which does not collide with the fine particle reducing agent having relatively small particle diameters and which collides with the coarse reducing agent having relatively large particle diameters, the fine particle reducing agent and the coarse reducing agent being included in the reducing agent injected from the reducing agent addition valve 4.

The "coarse reducing agent" referred to herein is the reducing agent having a size (particle diameter) capable of possessing the inertial force for slipping through (passing through) the selective reduction catalyst 30, the reducing agent having a size capable of penetrating through the exhaust gas without being mixed with the exhaust gas uniformly, or the reducing agent having a size incapable of being vaporized (not subjected to hydrolysis) until arrival at the selective reduction catalyst 30 from the reducing agent addition valve 4. On the other hand, the "fine particle reducing agent" is the reducing agent having small particle diameters as compared with the coarse reducing agent, which is the reducing agent having a size capable of being hydrolyzed until arrival at the selective reduction catalyst 30 from the reducing agent addition valve 4.

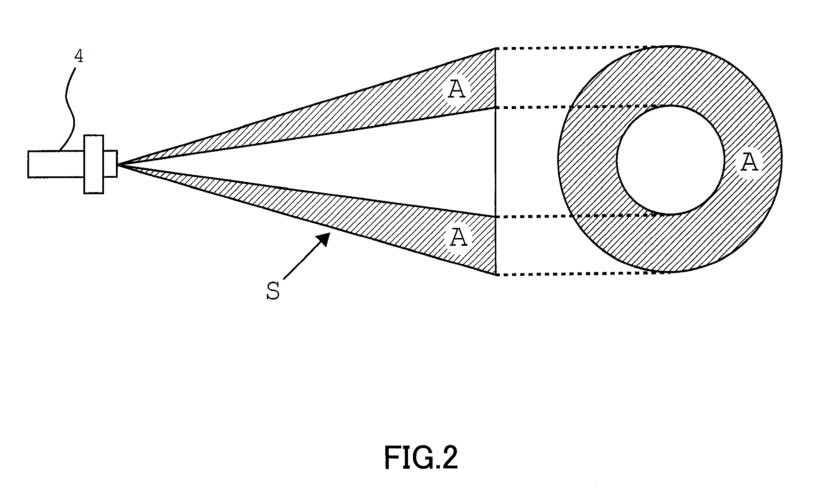

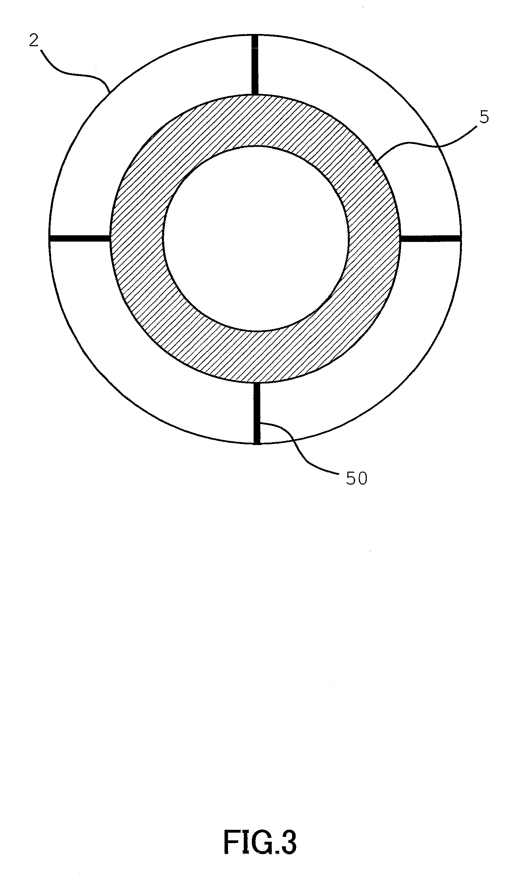

The dispersion member 5 is arranged on the flight route of the coarse reducing agent injected from the reducing agent addition valve 4. For example, when the reducing agent addition valve 4 is an injection valve which forms a full cone-shaped (cone-shaped) or hollow cone-shaped (shape of hollow cone) spray, as shown in Fig. 2, the coarse reducing agent tends to gather at the circumferential edge portion (A shown in Fig. 2) of the cone-shaped spray (S shown in Fig. 2). Accordingly, as shown in Fig. 3, the dispersion member 5 of this embodiment is constructed by an annular plate member having an open central portion. In this arrangement, the dispersion member 5 is fixed in the exhaust gas passage 2 by a plurality of support shafts 50.

In this case, if the dispersion member 5 is arranged at a position separated from the reducing agent addition valve 4, the outer diameter of the cone-shaped spray is increased. Therefore, it is necessary to increase the outer diameter of the dispersion member 5. If the outer diameter of the dispersion member 5 is increased, the exhaust resistance is increased. Therefore, it is preferable that the dispersion member 5 is arranged at a position which is close to the reducing agent addition valve 4 as much as possible. When the dispersion member 5 is arranged in the vicinity of the reducing agent addition valve 4, the outer diameter of the dispersion member 5 can be suppressed to be small. As a result, the increase in the exhaust resistance, which would be otherwise caused by the dispersion member 5, can be suppressed to be small.

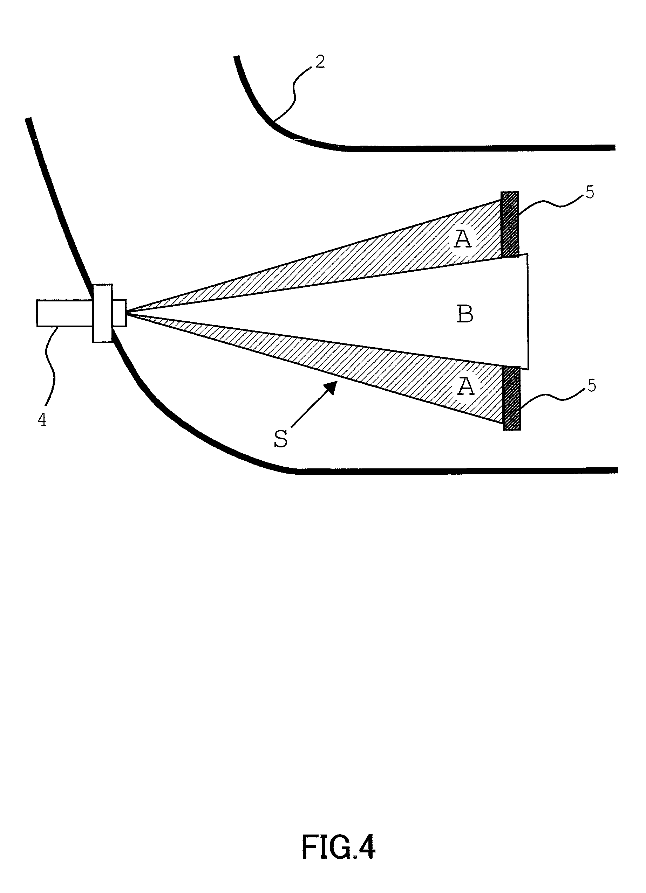

According to the dispersion member 5 constructed as described above, as shown in Fig. 4, the coarse reducing agent (A shown in Fig. 4), which is included in the reducing agent injected from the reducing agent addition valve 4, collides with the dispersion member 5, and the fine particle reducing agent (B shown in Fig. 4) passes through the hollow portion of the dispersion member 5. In other words, only the coarse reducing agent of the reducing agent injected from the reducing agent addition valve 4 collides with the dispersion member 5.

When the coarse reducing agent collides with the dispersion member 5, the coarse reducing agent is converted into fine particles. The coarse reducing agent, which has been converted into fine particles, is dispersed in the exhaust gas. On the other hand, the fine particle reducing agent is uniformly mixed with the exhaust gas, even when the fine particle reducing agent does not collide with the dispersion member 5, because the particle diameter is small and the weight (mass) is small. As a result, substantially all of the reducing agent injected from the reducing agent addition valve 4 is mixed with the exhaust gas uniformly or homogeneously.

Further, the size of the dispersion member 5 (front surface projected area in the flow direction of the exhaust gas) is decreased as compared with when all of the reducing agent injected from the reducing agent addition valve 4 is allowed to collide therewith. Therefore, it is possible to realize the fine particle formation of the reducing agent and the improvement in the dispersibility, while suppressing and decreasing the increase in the exhaust resistance which would be otherwise caused by the arrangement of the dispersion member 5.

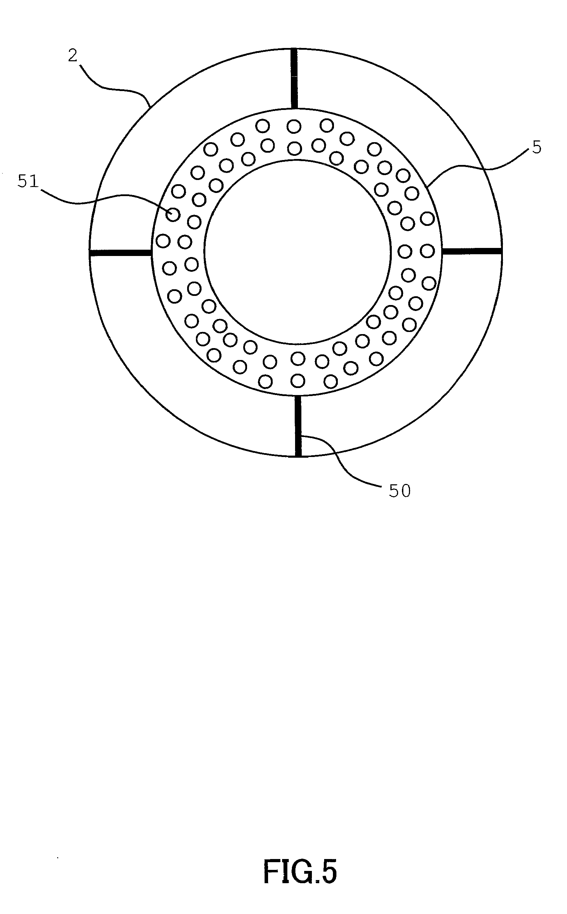

An example, in which the annular plate member is used as the dispersion member 5, is described in this embodiment. However, as shown in Fig. 5, it is also allowable to use an annular plate member provided with a plurality of through-holes 51. In this arrangement, when the diameters of the through-holes 51 are formed to be smaller than the particle diameter of the coarse reducing agent, a part of the exhaust gas and the reducing agent converted into fine particle as a result of the collision with the dispersion member 5 pass through the through-holes 51. Therefore, it is possible to further decrease the exhaust resistance resulting from the dispersion member 5.

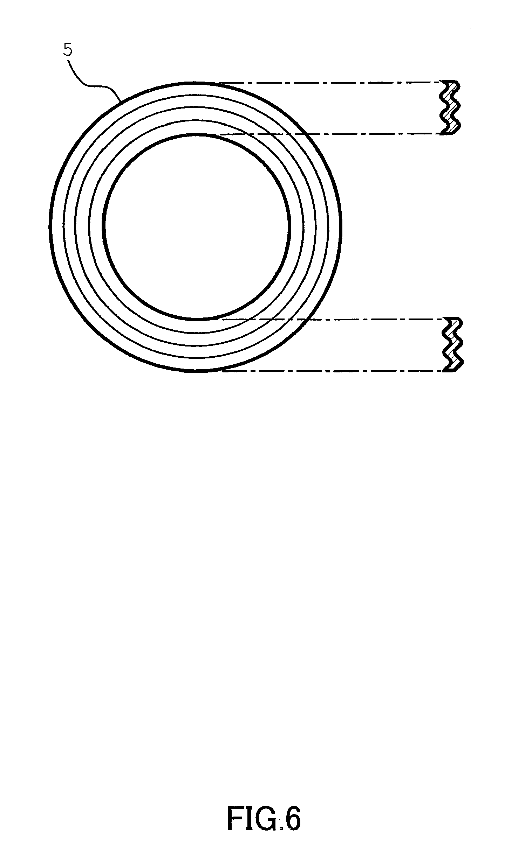

When an annular plate member is used as the dispersion member 5, it is also allowable that protrusions and recesses are provided on the surface disposed on the upstream side. In this case, the reducing agent in the liquid phase, which is adhered to the dispersion member 5, is easily vaporized. As for the method for providing the protrusions and recesses on the surface of the dispersion member 5, as shown in Fig. 6, it is possible to use a method in which a plate member having a wavy cross section is formed to have an annular shape. When a swirl injector, which injects the reducing agent while swirling the reducing agent in a spiral form, is used as the reducing agent addition valve 4, if the protrusions and recesses are provided on the surface of the dispersion member 5, then the fine particle formation is facilitated when the coarse reducing agent collides with the dispersion member 5.

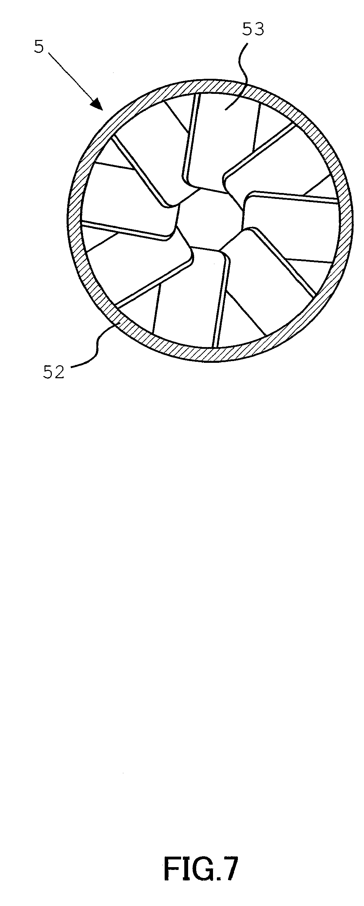

As shown in Fig. 7, as for the dispersion member 5, it is also possible to use a member in which a plurality of plate members (blades or vanes) 53 are arranged in a spiral form on the inner circumferential surface of a cylindrical member 52. In this arrangement, the plurality of blades 53 are arranged so that they are not brought in contact with each other. According to the dispersion member 5 as described above, the coarse reducing agent and the exhaust gas, which collide with the blades of the dispersion member 5, swirl in a spiral form. As a result, the mixing is facilitated between the exhaust gas and the reducing agent converted into fine particles by making collision with the blades. Further, the plurality of blades 53 are arranged while providing gaps therebetween. Therefore, the increase in the exhaust resistance caused by the dispersion member 5 can be suppressed to be smaller as well.

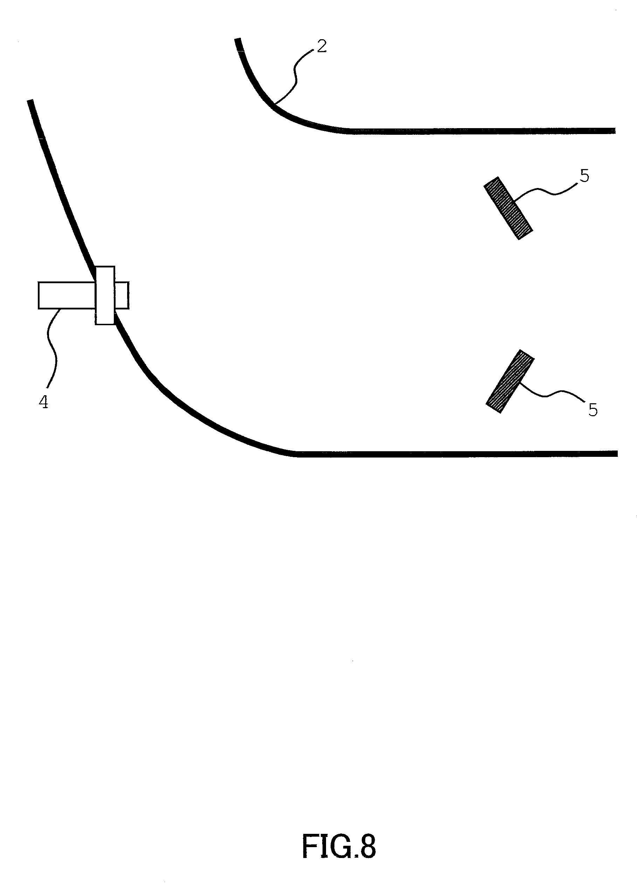

As for the dispersion member 5, as shown in Fig. 8, it is also possible to use a member in which an annular plate member is formed to have a tapered form. In this arrangement, the portion of the plate member, which is disposed inwardly in the radial direction, is positioned on the downstream side in the exhaust gas flow direction as compared with the portion which is disposed outwardly in the radial direction. According to the construction as described above, the angle of collision between the dispersion member 5 and the exhaust gas is smaller than the right angle. Therefore, the increase in the exhaust resistance caused by the dispersion member 5 can be further suppressed to be small.

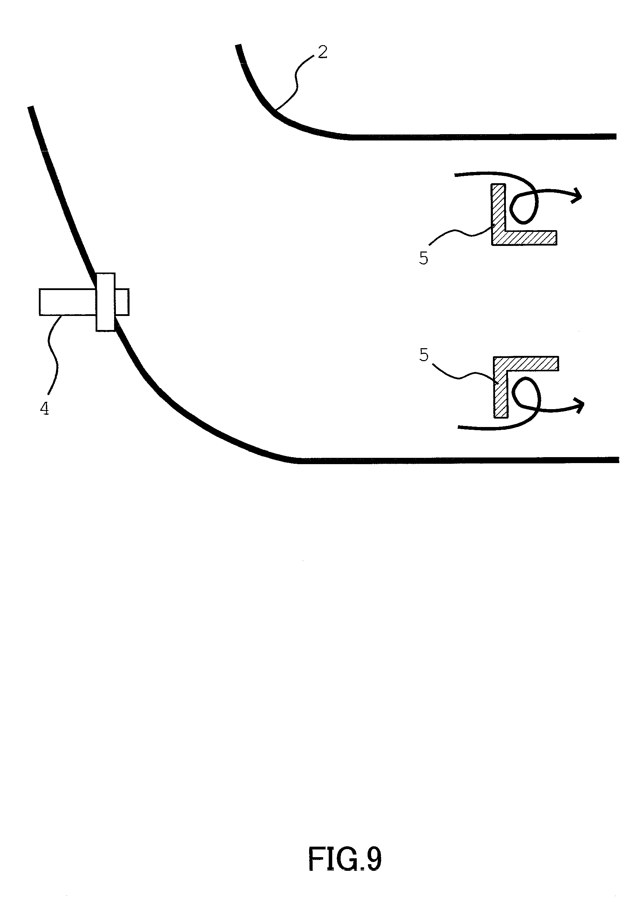

As for the dispersion member 5, as shown in Fig. 9, it is also possible to use a member in which an upstream side end portion of a cylindrical member protrudes outwardly in the radial direction. In this case, the exhaust gas, which makes a detour to avoid the dispersion member 5, generates the back step flow as shown by the arrow in Fig. 9. Therefore, the agitation is facilitated between the exhaust gas and the reducing agent. As a result, the exhaust gas and the reducing agent are mixed with each other uniformly.

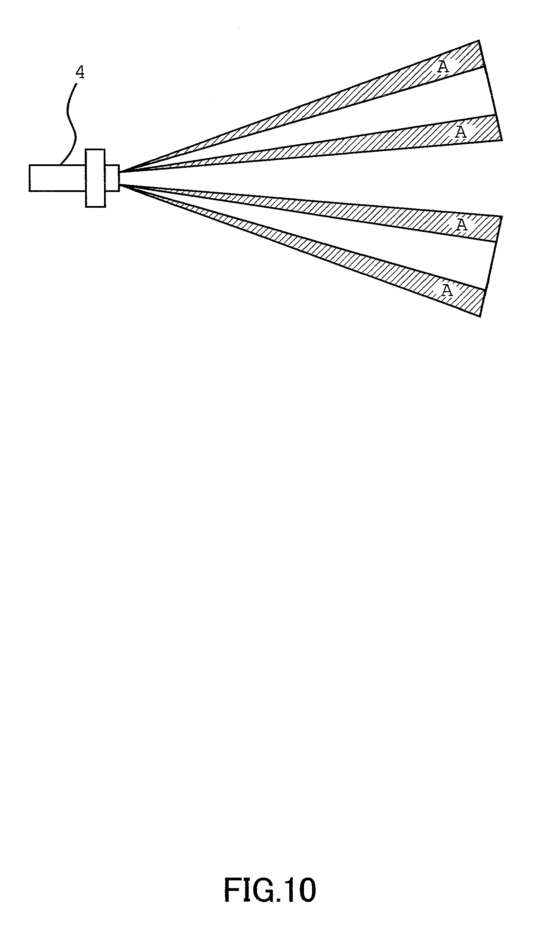

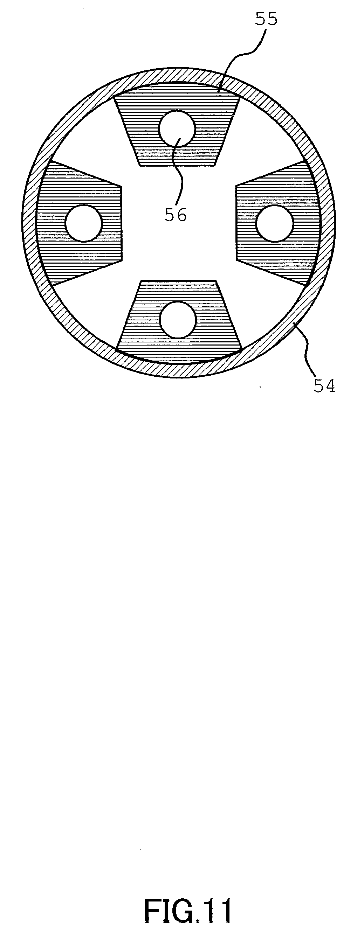

When a multi-hole type injection valve, in which a plurality of injection holes are arranged in an annular form, is used as the reducing agent addition valve 4, as shown in Fig. 10, the reducing agent, which is injected from the respective injection holes, forms a full cone-shaped (cone-shaped) or hollow cone-shaped (shape of hollow cone) spray. Accordingly, when the multi-hole type injection valve is used as the reducing agent addition valve 4, it is also appropriate to adopt a construction as shown in Fig. 11 as a dispersion member 5. The dispersion member 5 shown in Fig. 11 is the member in which a plurality of plate members 55 are provided on the inner circumferential surface of an annular member 54. The respective plate members 55 are arranged on the flight routes of the reducing agent injected from the respective injection holes 22. Further, through-holes 56 are formed at portions overlapped with the flight routes of the fine particle reducing agent in the respective plate members 55. According to the dispersion member 5 as described above, only the coarse reducing agent, which is included in the reducing agent injected from the respective injection holes 22, can be allowed to collide with the plate members 55. As a result, it is possible to realize the fine particle formation of the coarse reducing agent and the improvement in the dispersibility thereof, while suppressing and decreasing the increase in the exhaust resistance caused by the dispersion member 5. In the example shown in Fig. 11, the dispersion member 5 is provided with the four plate members 55. However, the number of the plate members 55 may be either not more than three or not less than five. In short, it is appropriate that the same number of the plate members as the number of the injection holes of the reducing agent addition valve 4 are provided.

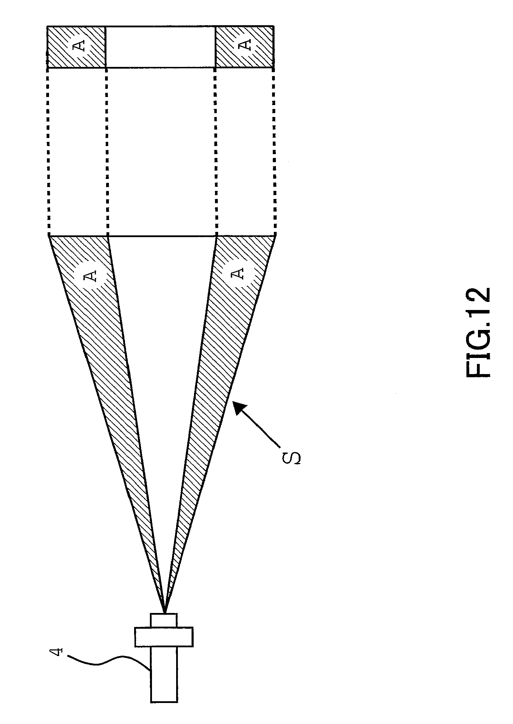

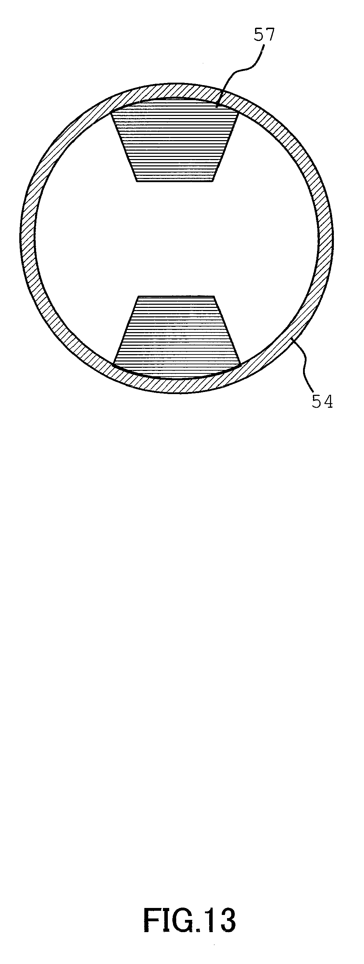

When a slit type injection valve, which has an injection hole having a rectangular cross section, is used as the reducing agent addition valve 4, as shown in Fig. 12, the reducing agent, which is injected from the reducing agent addition valve 4, forms a sectoral spray. In this arrangement, the coarse reducing agent tends to gather at the both ends of the sectoral spray (A shown in Fig. 12). Accordingly, when the slit type injection valve is used as the reducing agent addition valve 4, it is also allowable to adopt a construction as shown in Fig. 13 as the dispersion member 5. The dispersion member 5 shown in Fig. 13 is the member in which plate members 57 are provided at opposing two positions on the inner circumferential surface of an annular member 54. According to the dispersion member 5 as described above, only the coarse reducing agent, which is included in the reducing agent injected from the reducing agent addition valve 4, can be allowed to collide with the plate member 57. As a result, it is possible to realize the fine particle formation of the coarse reducing agent and the improvement in the dispersibility thereof, while suppressing and decreasing the increase in the exhaust resistance caused by the dispersion member 5.

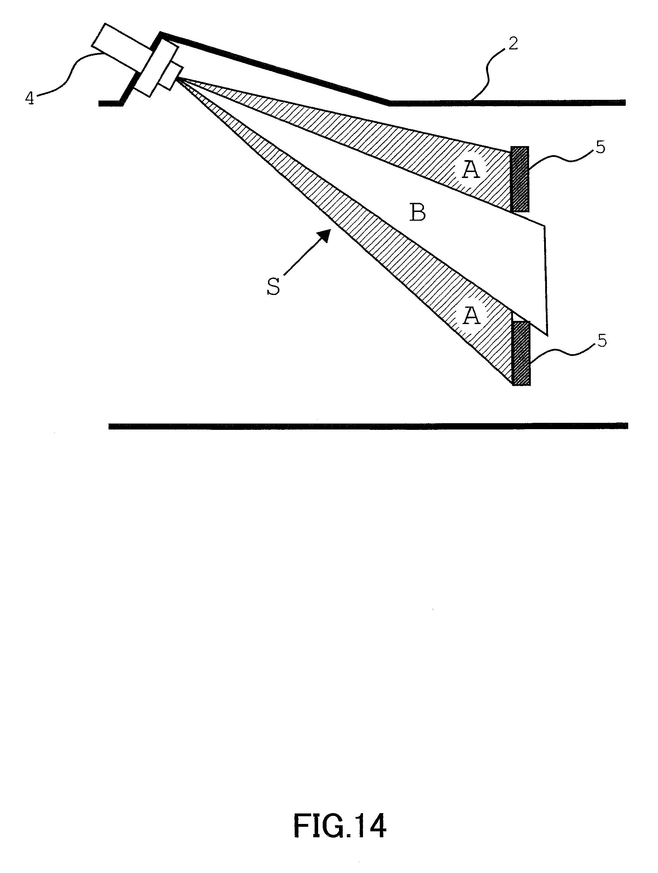

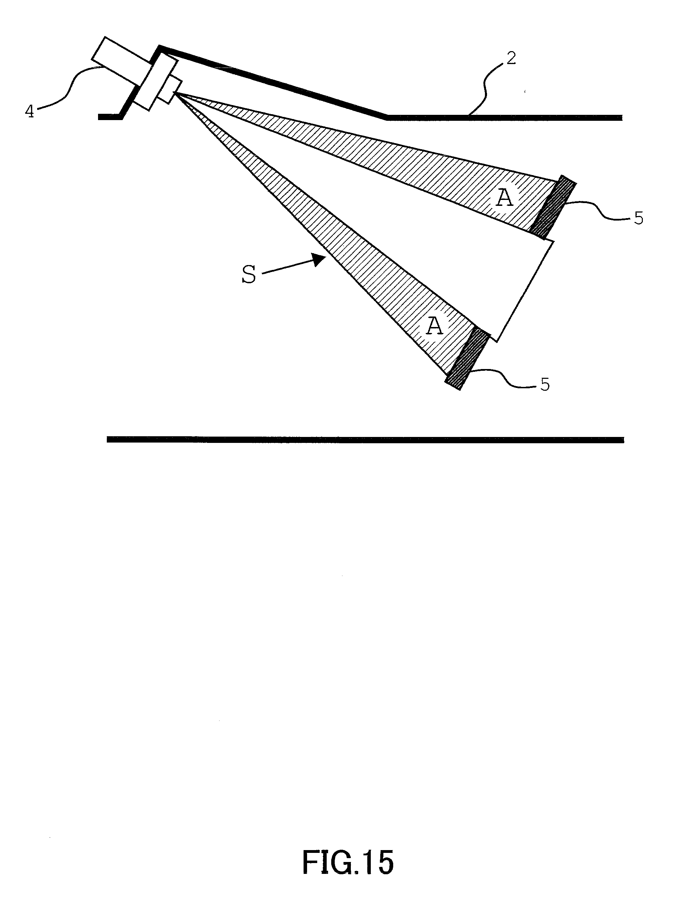

In the embodiment of the present invention, the example has been described, in which the reducing agent addition valve 4 is arranged so that the axial direction of the reducing agent addition valve 4 is parallel to the flow direction of the exhaust gas. However, as shown in Fig. 14, the reducing agent addition valve 4 may be arranged so that the axial direction of the reducing agent addition valve 4 obliquely intersects the flow direction of the exhaust gas. In this case, as shown in Fig. 14, the dispersion member 5 may be arranged perpendicularly to the flow direction of the exhaust gas on the flight route of the coarse reducing agent (A shown in Fig. 14). Further, as shown in Fig. 15, the dispersion member 5 may be arranged obliquely with respect to the flow direction of the exhaust gas on the flight route of the coarse reducing agent (A shown in Fig. 15). In short, the dispersion member 5 may be arranged in any manner provided that the dispersion member 5 is disposed on the flight route of the coarse reducing agent.

### (second Embodiment)

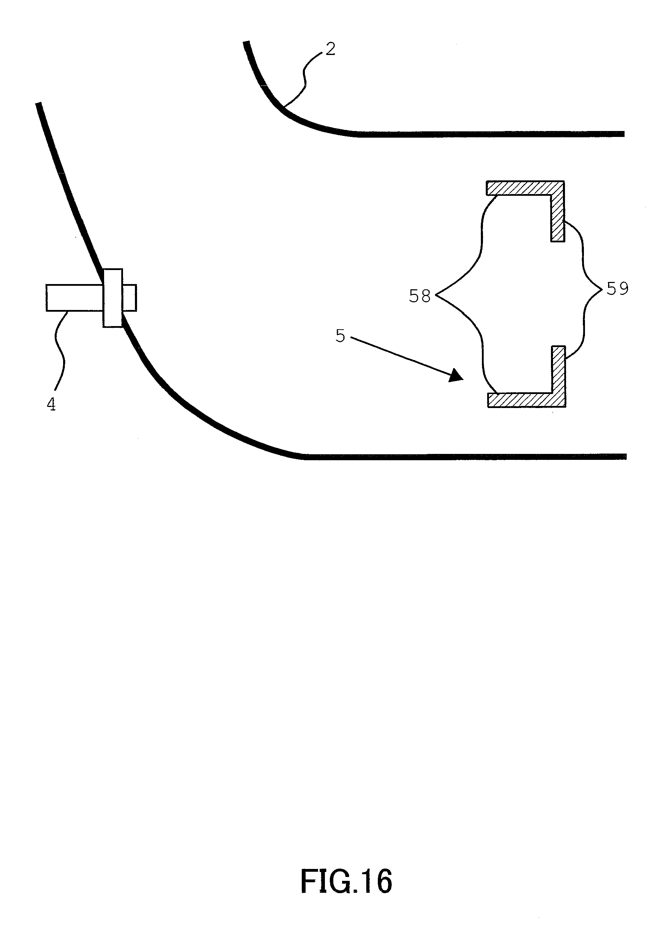

Next, an explanation will be made on the basis of Figs. 16 to 21 about a second embodiment of the exhaust gas purification apparatus for the internal combustion engine according to the present invention. In this section, the construction different from that of the first embodiment described above will be explained, and the same or equivalent construction will be omitted from the explanation.

The difference between the first embodiment described above and this embodiment resides in that the coarse reducing agent, which is injected from the reducing agent addition valve 4, is allowed to collide with the dispersion member 5 a plurality of times.

Fig. 16 shows a construction of a dispersion member 5 in this embodiment. With reference to Fig. 16, the dispersion member 5 is provided with a cylindrical member 58, and an annular protruding portion 59 which protrudes inwardly in the radial direction from the end portion on the downstream side of the cylindrical member 58. The cylindrical member 58 and the protruding portion 59 are arranged on the flight route of the coarse reducing agent injected from the reducing agent addition valve 4.

According to the dispersion member 5 constructed as described above, the coarse reducing agent collides with the inner wall surface of the protruding portion 59 after colliding with the inner wall surface of the cylindrical member 58 in some cases, and the coarse reducing agent collides with the inner wall surface of the cylindrical member 58 after colliding with the inner wall surface of the protruding portion 59 in other cases. As a result, the conversion into fine particles (fine particle formation) of the coarse reducing agent is further facilitated. Further, the coarse reducing agent stays in the space surrounded by the cylindrical member 58 and the protruding portion 59. Therefore, it is possible to facilitate the vaporization and the hydrolysis of the coarse reducing agent, and it is also possible to facilitate the mixing with the exhaust gas.

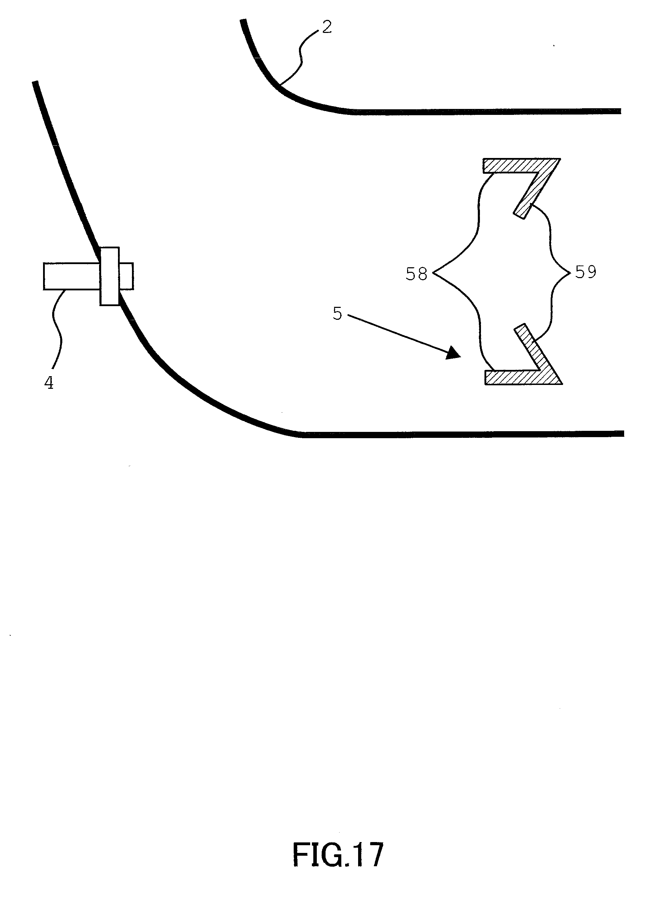

In the example shown in Fig. 16, the protruding portion 59 protrudes perpendicularly to the cylindrical member 58 (in parallel to the radial direction of the exhaust gas passage 2). However, as shown in Fig. 17, the protruding portion 59 may protrude while being inclined to the upstream side in the flow direction of the exhaust gas. According to the construction as described above, the coarse reducing agent more reliably collides with both of the inner wall surface of the cylindrical member 58 and the inner wall surface of the protruding portion 59, and the coarse reducing agent easily stays in the space surrounded by the cylindrical member 58 and the protruding portion 59. Therefore, the conversion of the coarse reducing agent into the fine particles is further facilitated, and the vaporization and the hydrolysis are further facilitated. In another arrangement, the protruding portion 59 may protrude outwardly in the radial direction from the end portion on the downstream side of the cylindrical member 58.

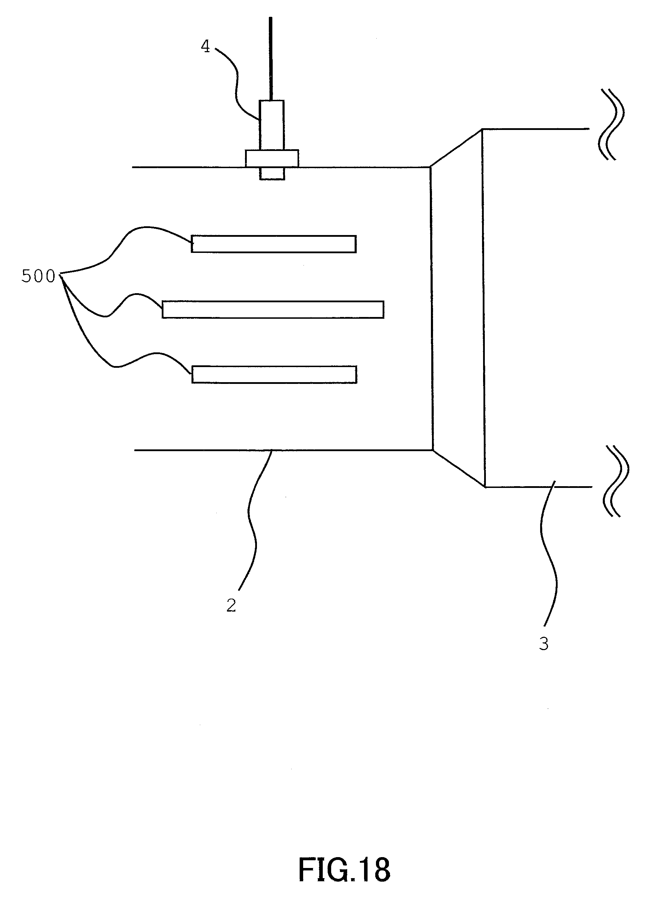

In this embodiment, the example has been described, in which the reducing agent addition valve 4 is arranged so that the axial direction of the reducing agent addition valve 4 is parallel to the flow direction of the exhaust gas. However, as shown in Fig. 18, the reducing agent addition valve 4 may be arranged so that the axial direction of the reducing agent addition valve 4 is perpendicular to the flow direction of the exhaust gas.

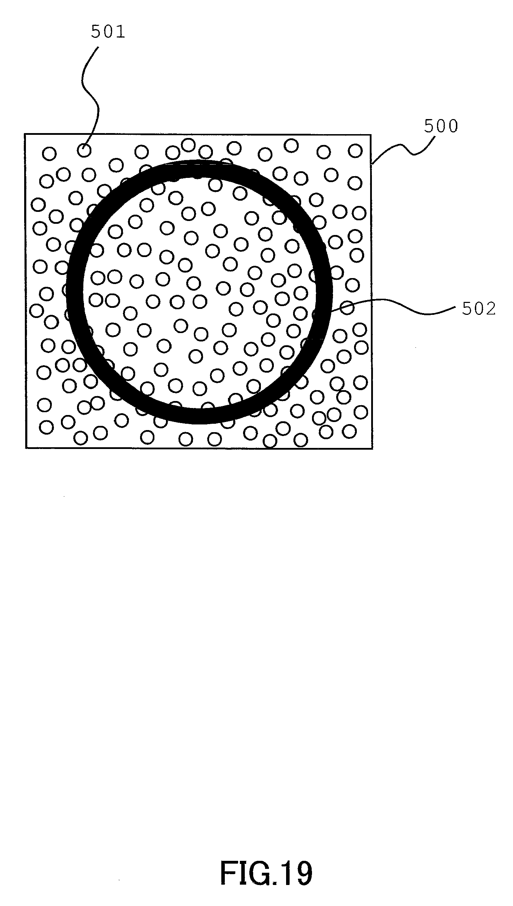

In this arrangement, a dispersion member 5 may be provided with a plurality of collision members 500 arranged in the radial direction of the exhaust gas passage 2. As shown in Fig. 19, each of the collision members 500 is constructed by a plate member provided with a plurality of through-holes 501. In each of the collision members 500, any through-hole 501 is not provided at a portion 502 overlapped with the flight route of the coarse reducing agent (the portion 502 is hereinafter referred to as "non-penetrating portion 502") .

According to the construction shown in Fig. 19, the fine particle reducing agent passes through the through-holes of the collision members 500, and the coarse reducing agent collides with the non-penetrating portions 502 of the plurality of collision members 500 a plurality of times, the fine particle reducing agent and the coarse reducing agent being included in the reducing agent injected from the reducing agent addition valve 4. As a result, it is possible to realize the improvement in the dispersibility and the fine particle formation of the coarse reducing agent, and it is also possible to obtain a uniform concentration distribution of the reducing agent in the radial direction of the exhaust gas passage 2.

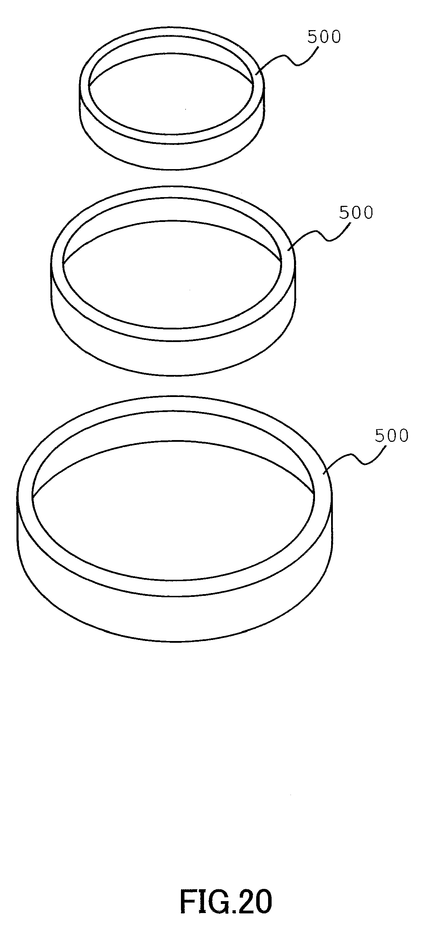

As shown in Fig. 20, the plurality of collision members 500 may be arranged on only the flight route of the coarse reducing agent. In this arrangement, as for each of the collision members 500, it is possible to use a flat plate, a cylindrical member, or a member obtained by forming a semicylindrical member to have an annular form. According to the construction as described above, the coarse reducing agent can be allowed to collide with the plurality of collision members 500.

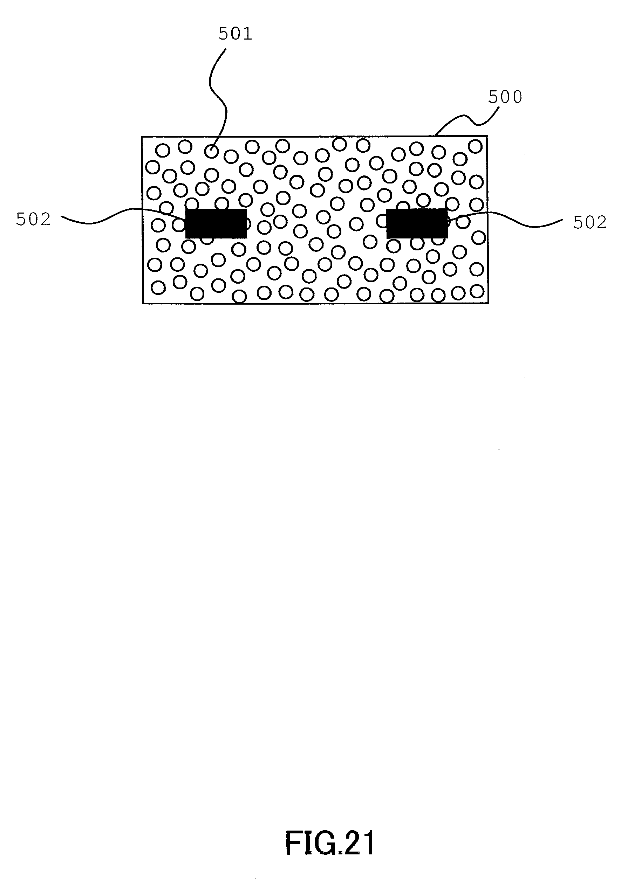

In the exemplary arrangement shown in Fig. 18, when the reducing agent addition valve 4 is a slit-shaped injection valve, the dispersion member 5 may be a plate-shaped collision member 500 provided with a plurality of through-holes 501 as shown in Fig. 21, wherein the dispersion member 5 is the member in which non-penetrating portions 502 are formed at positions corresponding to the both ends of the sectoral spray.

### Description Of The Reference Numerals And Symbols

1: internal combustion engine
2: exhaust gas passage
3: catalyst casing
4: reducing agent addition valve
5: dispersion member
22: respective injection holes
30: selective reduction catalyst
31: ammonia oxidation catalyst
40: pump, 41: reducing agent tank
50: support shaft
51: through-hole
52: cylindrical member
53: blade
54: annular member
55: plate member
56: through-hole
57: plate member
58: cylindrical member
59: protruding portion
500: collision member
501: through-hole
502: non-penetrating portion

## Claims

1. An exhaust gas purification apparatus for an internal combustion engine, comprising:
an exhaust gas purification catalyst which is arranged in an exhaust gas passage of the internal combustion engine;
a reducing agent addition valve which adds a reducing agent to an exhaust gas allowed to flow upstream from the exhaust gas purification catalyst; and
a dispersion member which is a member for allowing the reducing agent added from the reducing agent addition valve to collide therewith and which is arranged on a flight route of a coarse reducing agent, the coarse reducing agent being included in the reducing agent added from the reducing agent addition valve and the coarse reducing agent being the reducing agent having relatively large particle diameters.

2. The exhaust gas purification apparatus for the internal combustion engine according to claim 1, wherein:
the reducing agent addition valve is an injection valve for forming a cone-shaped spray; and
the dispersion member is arranged on a route along which a circumferential edge portion of the cone-shaped spray flies.

3. The exhaust gas purification apparatus for the internal combustion engine according to claim 2, wherein the dispersion member is a member having a protruding portion which is formed on one end surface of a cylindrical member and which extends in a radial direction.

4. The exhaust gas purification apparatus for the internal combustion engine according to claim 2, wherein the dispersion member is a plate member which is formed to have an annular form.

5. The exhaust gas purification apparatus for the internal combustion engine according to claim 4, wherein protrusions and recesses are formed on a surface of the plate member.

6. The exhaust gas purification apparatus for the internal combustion engine according to claim 4, wherein a plurality of through-holes are provided through the plate member.

7. The exhaust gas purification apparatus for the internal combustion engine according to claim 2, wherein the dispersion member is a member in which a plurality of plate members are arranged in an annular form.
